# EUROPÄISCHE PATENTANMELDUNG

(11) **EP 1 610 434 A1**
(43) Veröffentlichungstag der Anmeldung: **28.12.2005**
(21) Anmeldenummer: 05105267.8
(22) Anmeldetag: 15.06.2005
(51) Int. Cl.: H02H 9/04

(54) **Schaltungsanordnung zur Begrenzung von Überspannungen bei Speichermodulen**

(30) Priorität: 21.06.2004 EP 04405381
(71) Anmelder: Inventio AG, 6052 Hergiswil (CH)
(72) Erfinder: Grundmann, Steffen, 8906, Bonstetten (CH)
(74) Vertreter: Gaussmann, Andreas

(57) **Zusammenfassung**

Eine Schaltungsanordnung zur Begrenzung von Überspannungen bei aus Speicherelementen (SC) zusammengesetzten Speichermodulen (10) umfasst eine Reihenschaltung (12) aus n Speicherelementen (SCₙ). Die Reihenschaltung (12) ist zwischen ein erstes Potential (V₁) und ein zweites Potential (V₂) geschaltet und den n Speicherelementen (SCₙ) sind spannungsbegrenzende Elemente (VLE) zugeordnet. Um einen Überspannungsschutz für Module aus Speicherelementen anzugeben, der einfach und kostengünstig realisierbar ist und einen zuverlässigen Schutz gegen eine Beschädigung von Speicherelementen bei Überspannungen, insbesondere infolge von Kapazitätsverlusten gewährleistet, wird vorgeschlagen, dass M die maximale Anzahl von unmittelbar miteinander verbundenen Speicherelementen (SC) einer vorgegebenen Kombination ist, wobei für M ≥ 2 jeder Kombination ein spannungsbegrenzendes Element (VLE) parallel geschaltet ist und einem am ersten Potential (V₁) angeschlossenen ersten Speicherelement (SC₁) und einem am zweiten Potential (V₂) angeschlossenen n-ten Speicherelement (SCₙ) jeweils ein spannungsbegrenzendes Element (VLE) parallel geschaltet ist und wobei für M>2 jeder Unterkombination aus wenigstens 2 unmittelbar miteinander verbundenen Speicherelementen (SC) der Kombination, die ein am ersten Potential (V₁) oder am zweiten Potential (V₂) angeschlossenes Speicherelement (SC) aufweist, jeweils ein spannungsbegrenzendes Element (VLE) parallel geschaltet ist.

## Beschreibung

Die Erfindung betrifft eine Schaltungsanordnung zur Begrenzung von Überspannungen bei aus Speicherelementen zusammengesetzten Speichermodulen, umfassend eine Reihenschaltung aus n Speicherelementen, wobei die Reihenschaltung zwischen ein erstes Potential und ein zweites Potential geschaltet ist und den n Speicherelementen spannungsbegrenzende Elemente zugeordnet sind.

Speichermodule dienen der Speicherung von elektrischer Energie. Die Speicherkapazität von herkömmlichen Speicherelementen ist meist geringer als die erforderliche Gesamtmenge der zu speichernden Energie. Meist ist die maximal zulässige Spannung über einem Speicherelement geringer als die für die Anwendung erforderliche Spannung. Deshalb werden mehrere Speicherelemente mit geringerer Speicherkapazität zu einem Speichermodul kombiniert. Übliche Speicherelemente sind als Kondensatoren oder Akkumulatoren ausgestaltet. Eine besondere Art von Kondensatoren bilden Superkapazitäten (SCAP). Diese Superkapazitäten werden auch als Dünnschichtkondensatoren, als Ultracaps, Boostcaps oder Supercaps bezeichnet. Derartige Superkapazitäten erhalten zunehmende Bedeutung als elektrische Energiespeicher für eine Vielzahl von Anwendungen, beispielsweise im Automobilbau oder bei tragbaren elektrischen Geräten, bei denen schnell sehr hohe Ladungsmengen gespeichert oder freigesetzt werden müssen.

Eine einzelne Superkapazität kann jedoch nur mit einer zulässigen Spannung Uₘₐₓ von 2,3 V bis 2,5 V betrieben werden, sodass für die meisten Anwendungsfälle mehrere Superkapazitäten in einer Reihenschaltung zusammengeschaltet werden und ein Speichermodul mit einer Maximalspannung von N*Uₘₐₓ gebildet wird. Superkapazitäten unterliegen einer Fertigungstoleranz, die sich in einer Kapazitätsschwankung von -10 % bis +30 % niederschlagen kann. Außerdem können durch Alterung Kapazitätsverluste von ca. 20 % entstehen. Der Alterungsprozess von Superkapazitäten ist temperaturabhängig und damit nicht für alle in einem Speichermodul enthaltenen Superkapazitäten gleich. Daraus ergibt sich bei einer Aufladung eines Superkapazitäten enthaltenden Speichermoduls eine ungleichmäßige Spannungsaufteilung zwischen den einzelnen Speicherelementen. Letztendlich wird die Superkapazität, die aufgrund des Alterungsprozesses die kleinste Kapazität aufweist, in der Reihenschaltung mit der größten Spannung beaufschlagt. Um jedoch eine gleichmäßige Spannungsaufteilung zu erreichen und eine Schädigung der Superkapazitäten zu vermeiden, gibt es verschiedene Vorgehensweisen.

Eine Möglichkeit besteht darin, die in einem Speichermodul verwendeten Superkapazitäten durch eine Messung der Kapazität und einer entsprechenden Auswahl der Superkapazitäten mit geringen Fertigungstoleranzen auszuwählen. Dies hat den Nachteil, dass derart ausgewählte Superkapazitäten mit kleinerer Toleranz höhere Beschaffungskosten nach sich ziehen. Des Weiteren bietet dieser Ansatz keine Sicherung gegen Alterungseffekte, da auch Superkapazitäten mit geringer Fertigungstoleranz der Alterung unterliegen und Kapazitätsverlusten ausgesetzt sind. Somit können die in einem Speichermodul verwendeten Superkapazitäten beschädigt werden, da die Spannungen an den einzelnen Kondensatoren unterschiedlich werden.

Eine weitere Möglichkeit zum Schutz vor Überspannungen aufgrund von Kapazitätsverlusten besteht darin, ein gesamtes Speichermodul mit einer niedrigeren Gesamtspannung zu betreiben. Dies ist jedoch deshalb nachteilig, da das gesamte Speichermodul ineffizient ausgenutzt wird. Um Überspannungen an den Superkapazitäten zu vermeiden, ist es auch möglich, den Superkapazitäten Widerstände parallel zu schalten, die jedoch einen hohen Entladungsstrom nach sich ziehen und somit einen bewusst in Kauf genommenen Energieverlust während des Betriebs bewirken. Werden die Widerstände zu gross gewählt, so wird damit die Symmetrieerwirkung verschlechtert. Eine weitere Möglichkeit, der Schädigung derartiger Superkapazitäten in einem Speichermodul entgegenzuwirken, besteht darin, eine aktive Überspannungsableitung mit Z-Dioden zu verwenden. Dazu werden die Z-Dioden jeweils einer Superkapazität parallel geschaltet. Dies hat jedoch den Nachteil, dass Z-Dioden mit einer Durchbruchspannung von 2,5 V aufgrund ihrer relativ weichen Diodenkennlinie ebenfalls eine große Selbstentladung unterhalb der Durchbruchspannung aufweisen und damit nicht effizient sind. Alternativ zur Verwendung von einer aktiven Überspannungsableitung mittels Z-Dioden können auch integrierte Schwellwertschaltungen verwendet werden, die eine aktive Überspannungsbegrenzung gewährleisten. Derartige Schwellwertschaltungen sind jedoch meist als integrierte Schaltungen ausgebildet und demzufolge relativ teuer.

Aus der WO 02/15363 A2 ist eine Stromspeicheranlage mit Batterien und Kondensatoren bekannt, bei der Superkapazitäten verwendet werden. Wie oben dargestellt, vertragen Superkapazitäten keine Überspannung und müssen somit überwacht werden. In der WO 02/15363 A2 werden mehrere unterschiedliche Beschaltungsvarianten zur Vermeidung von Überspannungen beschrieben. Es wird beschrieben, eine Z-Diode über mehrere Superkapazitäten zu schalten, wobei jedoch nur die Spannung über alle parallel zur Z-Diode liegenden Superkapazitäten begrenzt wird und nicht über eine Superkapazität allein. Somit ist die einzelne Superkapazität nicht vor Überspannungen geschützt.

Wenn es außer der parallel geschalteten Z-Diode über mehrere Superkapazitäten keine weiter Schutzbeschaltung gibt, dann weist die Superkapazität mit der kleineren Kapazität nach einem Ladevorgang eine größere Spannung auf. Wenn die Z-Diode die Spannung auf das doppelte der jeweils zulässigen Spannung der Superkapazitäten begrenzt, wird die Superkapazität mit der kleineren Kapazität überlastet.

Die Alterung hat üblicherweise eine Kapazitätsabnahme zur Folge. Außerdem schreiten die Alterungsvorgänge mit erhöhter Spannung beschleunigt fort, das heißt, es ist mit einer halbierten Lebensdauer bei einer Spannungserhöhung um 0,1 V zu rechnen. Somit kommt es zu einer verhängnisvollen Rückkopplung: Die kleinere Kapazität führt zu einer erhöhten Spannung. Die erhöhte Spannung führt zu einer schnelleren Alterung und diese wiederum zu einem beschleunigten Kapazitätsrückgang. Bei einer erneuten Aufladung wird dieses Element dann mit einer noch höheren Spannung belastet und altert damit noch schneller. Dies bedeutet, dass sich die Asymmetrie dann bis zum Totalausfall der Superkapazität verstärken wird. Denn der kleinste Kapazitätswert in der Reihenschaltung bestimmt die Gesamtkapazität entscheidend.

Demzufolge ergibt sich die Aufgabe, einen Überspannungsschutz für Module aus Speicherelementen anzugeben, der einfach und kostengünstig realisierbar ist und einen zuverlässigen Schutz gegen eine Beschädigung von Speicherelementen bei Überspannungen gewährleistet.

Es ist insbesondere eine Aufgabe der vorliegenden Erfindung bei der Verwendung von Superkapazitäten in Speichermodulen eine Schaltungsanordnung anzugeben, die eine Beschädigung der Speicherelemente bei Überspannungen infolge von Kapazitätstoleranzen verhindert.

Diese Aufgabe wird bei einer gattungsgemäßen Schaltungsanordnung durch die Merkmale des unabhängigen Anspruchs gelöst.

Der Erfindung liegt der Gedanke zugrunde, dass Z-Dioden eine kostengünstige und einfach schaltbare Möglichkeit zur Spannungsbegrenzung bieten. Da Speicherelemente meist eine niedrige zulässige Spannung aufweisen und demzufolge in einer Reihenschaltung verwendet werden müssen, um eine größere Ladungsmenge speichern zu können, wäre es naheliegend, jedem Speicherelement, wie es aus dem Stand der Technik bereits bekannt ist, eine Z-Diode mit einer geringen Durchbruchspannung parallel zu schalten, die der maximal zulässigen Spannung des entsprechenden Speicherelements entspricht. Da jedoch die Z-Dioden für niedrige Spannungen eine geneigte, relative weiche Kennlinie aufweisen, die bereits einen Entladestrom bei Spannungen unterhalb der Durchbruchspannung fließen lassen, ist dies nachteilig für die Gesamteffizienz des Speichermoduls. Die Speicherdauer des Gesamtmoduls wird durch den bereits vor der Durchbruchspannung fließenden Entladestrom reduziert. Andererseits haben Z-Dioden mit einer höheren Durchbruchspannung eine steilere Kennlinie, so dass erst bei Erreichen der Durchbruchspannung ein Strom fließt.

Deshalb wird bei der Erfindung eine Schaltungsanordnung eingesetzt, bei der jede mögliche Kombination von M unmittelbar miteinander verbundenen Speicherelementen, mit M ≥ 2, aus der Reihenschaltung ausgewählt wird und jeder möglichen Kombination von M unmittelbar zusammenhängenden Speicherelementen ein spannungsbegrenzendes Element parallel geschaltet wird. M bezeichnet dabei die maximale Anzahl von unmittelbar miteinander verbundenen Speicherelementen einer vorgegebenen Kombination. Damit können Z-Dioden mit einer höheren Durchbruchspannung als der der maximal zulässigen Spannung eines einzelnen Speicherelementes verwendet werden. Um weiter zu gewährleisten, dass die Spannung jedoch auch über jedem einzelnen Speicherelement überwacht wird, ist vorgesehen, einem am ersten Potential angeschlossenen ersten Speicherelement und einem am zweiten Potential angeschlossenen n-ten Speicherelement auch ein spannungsbegrenzendes Element parallel zuschalten. Wenn M > 2 gewählt wird, wird auch jeder Unterkombination aus wenigstens 2 unmittelbar miteinander verbundenen Speicherelementen der Kombination, die ein am ersten Potential oder am zweiten Potential angeschlossenes Speicherelement aufweist, jeweils ein spannungsbegrenzendes Element parallel geschaltet.

Die Reihenschaltung kann eine beliebige Zahl von Speicherelementen umfassen. Die Anzahl M der Speicherelemente, die zu einer Kombination von unmittelbar zusammenhängenden Speicherelementen gehören, kann von Schaltung zu Schaltung variieren. So kann bei einer Schaltung aus 5 Speicherelementen M = 2, 3, 4 oder 5 gewählt werden. Jeder Kombination aus M Speicherelementen wird jeweils ein spannungsbegrenzendes Element parallel geschaltet. Auch dem ersten und n-ten Speicherelement wird jeweils ein spannungsbegrenzendes Element parallel geschaltet. Weiter wird allen Unterkombinationen aus wenigstens 2 unmittelbar miteinander verbundenen Speicherelementen der Kombination, die am ersten und am zweiten Potential angeschlossen ist, jeweils ein spannungsbegrenzendes Element parallel geschaltet. Damit ergibt sich eine verschachtelte Anordnung der spannungsbegrenzenden Elemente in Bezug zu den Speicherelementen mit der Eigenschaft, das jedes Speicherelement von wenigstens zwei spannungsbegrenzenden Elementen überbrückt ist und somit auch eine Überspannung über ein einzelnes Speicherelement erkannt und verhindert wird.

Da sich die Maximalspannung von in Reihe geschalteten Speicherelementen aus der Summe der maximal zulässigen Spannungen Uₘₐₓ ergibt, kann zur Spannungsbegrenzung über eine Kombinationen aus M unmittelbar miteinander verbundenen Speicherelementen eine Z-Diode mit einer Durchbruchspannung verwendet werden, die M*Uₘₐₓ entspricht. Die maximal zulässige Spannung Uₘₐₓ von Superkapazitäten liegt beispielsweise bei etwa 2,3 V bis 2,5 V, und somit liegt die maximal zulässige Spannung über einer Kombination aus zwei Superkapazitäten bei maximal 2*Uₘₐₓ = 5 V. Aus diesem Grund können zur Spannungsbegrenzung kostengünstige Z-Dioden mit einer Durchbruchspannung von 5 V verwendet werden, die einen kostengünstigen Überspannungsschutz bereitstellen.

Das spannungsbegrenzende Element über dem ersten und dem letzten beziehungsweise n-ten Speicherelement der Reihenschaltung aus Speicherelementen muss eine Durchbruchspannung aufweisen, die der maximal zulässigen Spannung des überbrückten ersten oder n-ten Speicherelements entspricht. Bei einer einfachen Realisierung wird dem ersten und dem letzten beziehungsweise n-ten Speicherelement jeweils eine Z-Diode mit einer Durchbruchspannung von 2,5 V parallel geschaltet. Dies ist insofern nachteilig, als dass eine Z-Diode mit der geringen Durchbruchspannung von 2,5 V eine relative weiche Kennlinie hat und einen Entladestrom unterhalb der Durchbruchspannung aufweist. Deshalb wird bei einer vorteilhaften Ausgestaltung vorgeschlagen, die spannungsbegrenzenden Elemente für das erste und n-ten Speicherelement mittels einer integrierten Schaltung mit einer Überspannungsschutzfunktion zu realisieren. Durch die verschachtelte Anordnung der spannungsbegrenzenden Elemente und der zusätzlichen Absicherung am ersten und am n-ten Speicherelement wird eine Überspannung von jedem Speicherelement sicher abgeleitet, obwohl für den Überspannungsschutz nur einfache Z-Dioden verwendet werden. Dadurch wird es ermöglicht, einen kostengünstigen Überspannungsschutz für alle Speicherelemente eines Speichermoduls bereitzustellen und somit das Speichermodul bei Kapazitätsverlusten vor einem möglichen Totalausfall von Speicherelementen zu schützen.

In einer besonderen Ausgestaltung der Erfindung wird vorgeschlagen, dass das Speichermodul als Speicherelemente sowohl Superkapazitäten als auch Akkumulatoren umfasst, die anwendungsabhängig in einer Serienschaltung zusammengefasst sind, wobei für die Begrenzung der Überspannung entsprechende spannungsbegrenzende Elemente mit einer angepassten Durchbruchspannung oder Schwellwertspannung ausgewählt werden müssen.

In einer vorteilhaften Ausgestaltung der Erfindung werden jeweils Kombinationen von drei Speicherelementen verwendet, wobei dann jeweils ein spannungsbegrenzendes Element über drei Speicherelemente parallel geschaltet wird. Jede Kombination aus der Reihenschaltung des Speichermoduls, die drei Speicherelemente unmittelbar miteinander in Reihe verbindet, wird mit einem spannungsbegrenzenden Element überbrückt. Bei einer derartigen Schaltung der spannungsbegrenzenden Elemente ist es notwendig, sowohl über die Unterkombination bestehend aus dem ersten und dem zweiten, als auch über die Unterkombination bestehend aus dem n-ten und dem (n-1)ten Speicherelement ein weiteres spannungsbegrenzendes Element zu schalten. Auch über das erste Speicherelement und über das n-te Speicherelement wird ein spannungsbegrenzendes Element parallel geschaltet. Bei der Spannungsbegrenzung für das jeweils erste und das n-te Speicherelement ist zu beachten, dass die entsprechende Durchbruchspannung für den Überspannungsschutz niedrig gewählt wird, wobei für die Unterkombination aus dem ersten und dem zweiten und dem n-ten und (n-1)ten Speicherelement nur eine Durchbruchspannung von 2*Uₘₐₓ eines jeden Speicherelements gewählt wird.

Es ist darüber hinaus auch denkbar, eine Schaltung aufzubauen, bei der vier oder mehr Speicherelemente mit einem spannungsbegrenzenden Element überbrückt werden, wobei dann für die spannungsbegrenzenden Elemente eine Durchbruchspannung von M*Uₘₐₓ verwendet werden muss.

Nachfolgend wird die Erfindung anhand eines Ausführungsbeispiels näher erläutert, das in den Zeichnungen in schematischer Weise dargestellt ist. Es zeigen:
- Fig. 1: eine Schaltungsanordnung mit Superkapazitäten und parallel geschalteten Z-Dioden gemäß dem Stand der Technik;
- Fig. 2: eine schematische Schaltungsanordnung eines Speichermoduls gemäß der vorliegenden Erfindung;
- Fig. 3: ein Schaltungsbeispiel mit Superkapazitäten und Z-Dioden als spannungsbegrenzende Elemente und M = 2;
- Fig. 4: ein Schaltungsbeispiel mit Superkapazitäten und Z-Dioden und M = 3;
- Fig. 5: verschiedene Kennlinien von Z-Dioden;
- Fig. 6: eine schematische Schaltungsanordnung gemäß der vorliegenden Erfindung mit M = 4;

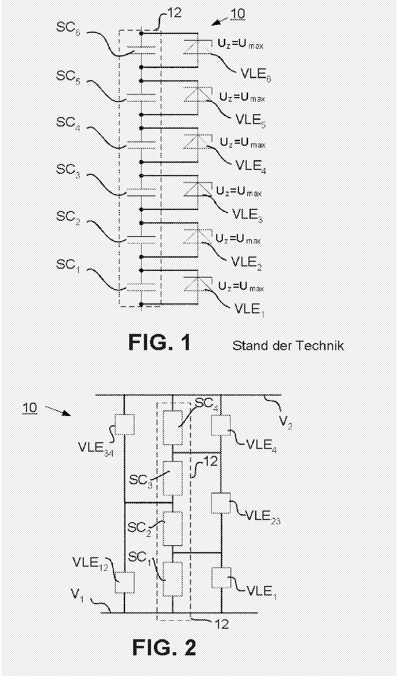

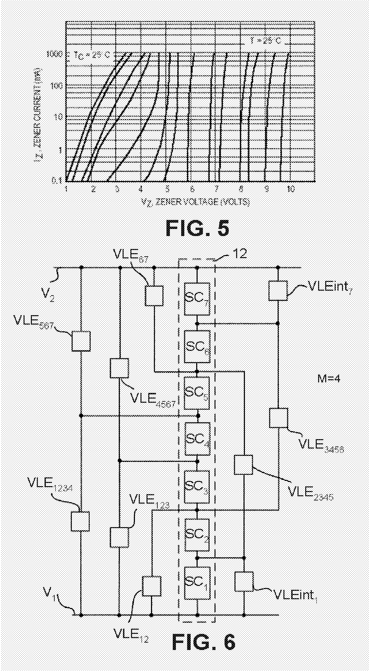

Fig. 1 zeigt ein Speichermodul 10 mit sechs Superkapazitäten SC₁ bis SC₆, die in einer Reihenschaltung 12 miteinander kombiniert sind. Jeder Superkapazität SC₁ bis SC₆ ist eine Z-Diode VLE₁-VLE₆ parallel geschaltet, die als Spannungsbegrenzung dient. Jede Z-Diode VLE₁-VLE₆ hat eine Durchbruchspannung U_{z}, die der maximal zulässigen Spannung Uₘₐₓ eines Superkondensators entspricht. Wie zuvor erwähnt, beträgt die maximale zulässige Spannung Uₘₐₓ einer Superkapazität 2,3 V bis 2,5 V. Das heißt, jede Z-Diode, die auch als VLE (Voltage Limited Element) bezeichnet wird, weist eine Durchbruchspannung U_{Z} von 2,5 V auf. In Fig. 5 sind verschiedene Kennlinien für Z-Dioden gegenübergestellt. Es ist zu erkennen, dass die Kennlinie einer Z-Diode im Bereich zwischen 2 V und 3 V Durchbruchspannung einen geneigten Kennlinienverlauf aufweisen. Das heißt, dass schon vor Erreichen der Durchbruchspannung U_{Z} ein Strom fließt, der die Speicherdauer der entsprechenden Superkapazität und damit die Speicherdauer des gesamten Speichermoduls reduziert.

In Fig. 2 ist eine schematische Schaltungsanordnung zum Schutz vor Überspannung von Speichermodulen dargestellt. Die erfindungsgemäße Schaltungsanordnung umfasst ein Speichermodul 10, bestehend aus vier Speicherelementen SC₁ bis SC₄. Jede Kombination von M unmittelbar zusammenhängenden Speicherelementen SC₁ bis SC₄, mit M = 2, ist mit einem spannungsbegrenzenden Element VLE₁₂, VLE₂₃, VLE₃₄ überbrückt. Bei einer Reihenschaltung von vier Speicherelementen SC₁ bis SC₄ werden somit drei Kombinationen von jeweils zwei Speicherelementen mit je einem spannungsbegrenzenden Element VLE überbrückt. Für die Spannungsbegrenzung kann dann der zweifache Spannungswert der maximal zulässigen Spannung Uₘₐₓ der beiden Speicherelemente gewählt werden. Um sicherzustellen, dass bei diesem Ausführungsbeispiel auch das erste und das letzte Speicherelement SC₁ und SC₄ des Speichermoduls 10 vor einer Überspannung infolge eines Kapazitätsverlustes geschützt werden, sind auch diese Speicherelemente SC₁ und SC₄ jeweils einzeln mit einem spannungsbegrenzenden Element VLE₁ und VLE₄ überbrückt. Dabei ist zu beachten, dass die Schwellspannung für den Überspannungsschutz am ersten und am letzten Speicherelement SC₁ und SC₄ der einfachen maximal zulässigen Spannung Uₘₐₓ des jeweiligen Speicherelements SC₁ und SC₄ entspricht.

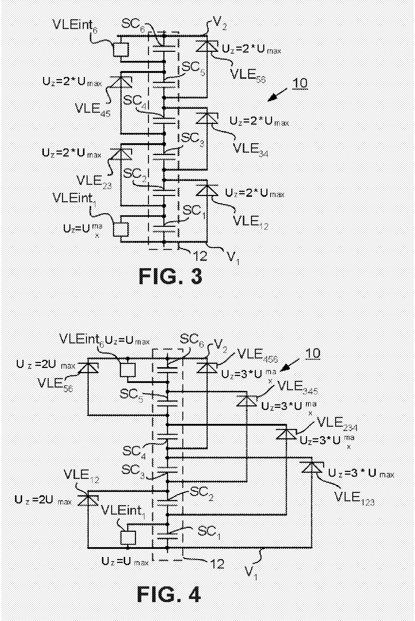

Fig. 3 zeigt eine Realisierung entsprechend Fig. 2, bei der als Speicherelemente sechs Superkapazitäten SC₁ bis SC₆ in einer Reihenschaltung 12 geschaltet sind. Die spannungsbegrenzenden Elemente VLE₁₂, VLE₂₃, VLE₃₄, VLE₄₅ und VLE₅₆ sind als Z-Dioden ausgebildet, wobei die spannungsbegrenzenden Elemente am ersten und sechsten Speicherelement SC₁ und SC₆ jeweils als integrierte Schaltung VLEint₁ und VLEint₆ ausgebildet sind.

Bei einer Reihenschaltung von sechs Superkapazitäten und M = 2 ergibt sich, dass in dieser Reihenschaltung 12 fünf verschiedene mögliche Kombinationen von unmittelbar zusammenhängenden Speicherelementen beziehungsweise Superkapazitäten vorhanden sind. Diese Kombinationen aus jeweils zwei Superkapazitäten werden jeweils mit einer Z-Diode VLE₁₂, VLE₂₃, VLE₃₄, VLE₄₅ und VLE₅₆, die die doppelte maximal zulässige Spannung Uₘₐₓ als Durchbruchspannung U_{Z} aufweist, überbrückt. Somit wird eine Spannung, die der doppelten maximal zulässigen Spannung Uₘₐₓ von etwa 5 V der zwei Superkapazitäten entspricht, über die jeweilige Z-Diode abgeleitet und eine Zerstörung der Superkapazitäten verhindert. Die erste Superkapazität SC₁ und die sechste Superkapazität SC₆ sind jeweils mit einer integrierten Schaltung mit Überspannungsschutzfunktion VLEint₁ und VLEint₆ überbrückt, die eine Schwellwertspannung von 2,5 V aufweist. Die integrierten Schaltungen VLEint₁ und VLEint₆ weisen eine steilere Kennlinie auf als eine Z-Diode mit 2,5 V Durchbruchspannung.

Fig. 4 zeigt ein weiteres Speichermodul 10 mit sechs Superkapazitäten SC₁ bis SC₆, die in einer Reihenschaltung 12 miteinander verschaltet sind. In diesem Fall wird M=3 gewählt. Bei einer Reihenschaltung 12, bestehend aus sechs Superkapazitäten SC₁ bis SC₆, weist dieses Speichermodul 10 vier Kombinationen von Superkapazitäten auf, die unmittelbar miteinander verbunden sind. Dies sind die Superkapazitäten SC₁ bis SC₃, die mit einer Z-Diode VLE₁₂₃ überbrückt werden, die eine Durchbruchspannung von etwa 7,5 V aufweist. Die Kombination, bestehend aus den Superkapazitäten SC₂ bis SC₄, wird mit einer Z-Diode VLE₂₃₄ überbrückt, die ebenfalls eine Durchbruchspannung von 7,5 V aufweist. Die nächste Kombination SC₃ bis SC₅ wird mit einer Z-Diode VLE₃₄₅ überbrückt und die letzte 3er-Kombination, bestehend aus SC₄ bis SC₆, wird ebenfalls mit einer Z-Diode VLE₄₅₆ überbrückt. Um auch einen Überspannungsschutz für die erste und letzte Superkapazität SC₁ und SC₆ bereitzustellen, werden diese jeweils mit einer integrierten Schaltung VLEint₁ und VLEint₆ mit Überspannungsschutzfunktion überbrückt, die jeweils eine Schwellwertspannung von 2,5 V aufweist. Weiter wird die am ersten Potential V₁ angeschlossene Unterkombination aus SC₁ und SC₂ mit einer Z-Diode VLE₁₂ mit einer Durchbruchspannung von 5 V überbrückt, und die Superkapazitäten SC₅ und SC₆ werden mit einer Z-Diode VLE₅₆ überbrückt, die eine Durchbruchspannung von 5 V aufweist. Bei einem derartigen Schaltungsmodul 10 ist sichergestellt, dass jede Superkapazität SC₁ bis SC₆ gegen eine Überspannung infolge einer Alterung und eines Kapazitätsverlustes geschützt ist.

Fig. 5 zeigt, wie oben bereits erwähnt, mehrere Kennlinienverläufe für Z-Dioden. Es ist deutlich zu erkennen, dass Z-Dioden mit einer Durchbruchspannung von über 5 V eine deutlich steilere Kennlinie aufweisen als Z-Dioden mit einer Durchbruchspannung unter 5 V.

In Fig. 6 ist ein weiteres Ausführungsbeispiel dargestellt, bei dem sieben Superkapazitäten in einer Reihenschaltung 12 miteinander geschaltet sind. In diesem Ausführungsbeispiel ist M = 4, das heißt es werden jeweils vier Superkapazitäten mit einem spannungsbegrenzenden Element überbrückt. Dies hat den Vorteil, dass für diesen Überspannungsschutz Z-Dioden VLE₁₂₃₄, VLE₂₃₄₅, VLE₃₄₅₆ und VLE₄₅₆₇ mit einer vierfachen Spannung der maximal zulässigen Spannung eines Speicherelements als Durchbruchspannung verwendet werden können. Weiter müssen die bei M = 4 notwendigen Unterkombinationen von unmittelbar miteinander verbundenen Speicherelementen, die am ersten Potential V₁ und am zweiten Potential V₂ angeschlossen sind, mit einem spannungsbegrenzenden Element überbrückt werden. Dies sind insbesondere für M-1 die Unterkombination SC₁, SC₂, SC₃ am ersten Potential V₁ und die Unterkombination SC₅, SC₆, SC₇ am zweiten Potential V₂. Bei M = 4 sind auch die Unterkombination SC₁ und SC₂ und die Unterkombination SC₆ und SC₇ jeweils mit einem spannungsbegrenzenden Element VLE₁₂ und VLE₆₇ zu überbrücken. Darüber hinaus sind das jeweils erste und das siebente Speicherelement SC₁ und SC₇ mit einem spannungsbegrenzenden Element VLEint₁ und VLEint₇ zu überbrücken.

Durch die erfindungsgemäße Schaltungsanordnung wird sichergestellt, bei zusammengesetzten Speichermodulen aus Superkapazitäten ein kostengünstiger Überspannungsschutz vorhanden ist. Durch die Verwendung von Z-Dioden mit hoher Durchbruchspannung tritt nur ein sehr geringer Entladestrom unterhalb der Durchbruchspannung auf, wodurch eine systembedingte vorzeitige Entladung des Speichermoduls verhindert wird. Weiter ist es durch die Verwendung von Z-Dioden mit hoher Durchbruchspannung als spannungsbegrenzende Elemente möglich, hohe Kapazitätsschwankungen aufzunehmen. Nicht zuletzt weisen Speichermodule eine hohe Lebensdauer auf, da eine Beschädigung infolge eines durch Alterung hervorgerufenen Kapazitätsverlusts unterbleibt.

Die erfindungsgemäße Schaltungsanordnung ist vorteilhafterweise geeignet für die Anwendung in einer Batterie mit maximaler Eingangsspannung von 42V and minimaler Ausgangsspannung von 25V, mit einer Lebensdauer von 15 Jahren.

Eine solche Batterie besteht vorteilhafterweise aus mehreren Superkapazitäten, welche auf eine erste PCB aufgelegt und durch eine zweite PCB abgedeckt werden. Beide PCBs tragen Kontaktsfläche für die Superkapazitäten und die entsprechenden Komponente der balancierenden Schaltung.

Auf die obere PCB wird ein Schaumgummi-Deckel als Federelement aufgelegt, um Kontakt-Druck auszuüben. Zwei weitere Metall- oder Kunststoffdeckel werden auf den oberen Schaumgummi-Deckel und unter die untere PCB eingeführt. Alle fünf Deckel weisen Löcher für Bolzen für die vertikale Befestigung auf, welche zusammengezogen werden, um genügend Kontakt-Druck zwischen den Superkapazitäten und der unteren und oberen PCB zu erzeugen.

Beispielsweise werden vier Superkapazitäten durch eine Z-Diode (M=4) überbrückt.

## Patentansprüche

1. Schaltungsanordnung zur Begrenzung von Überspannungen bei aus Speicherelementen (SC) zusammengesetzten Speichermodulen (10), umfassend eine Reihenschaltung (12) aus n Speicherelementen (SCₙ), wobei die Reihenschaltung (12) zwischen ein erstes Potential (V₁) und ein zweites Potential (V₂) geschaltet ist und den n Speicherelementen (SCₙ) spannungsbegrenzende Elemente (VLE) zugeordnet sind, **dadurch gekennzeichnet, dass** M die maximale Anzahl von unmittelbar miteinander verbundenen Speicherelementen (SC) einer vorgegebenen Kombination ist, wobei für M ≥ 2 jeder Kombination ein spannungsbegrenzendes Element (VLE) parallel geschaltet ist und einem am ersten Potential (V₁) angeschlossenen ersten Speicherelement (SC₁) und einem am zweiten Potential (V₂) angeschlossenen n-ten Speicherelement (SCₙ) jeweils ein spannungsbegrenzendes Element (VLE) parallel geschaltet ist und wobei für M > 2 jeder Unterkombination aus wenigstens 2 unmittelbar miteinander verbundenen Speicherelementen (SC) der Kombination, die ein am ersten Potential (V₁) oder am zweiten Potential (V₂) angeschlossenes Speicherelement (SC) aufweist, jeweils ein spannungsbegrenzendes Element (VLE) parallel geschaltet ist.

2. Schaltungsanordnung nach Anspruch 1, **dadurch gekennzeichnet, dass** die Speicherelemente (SC) Superkapazitäten und/oder Akkumulatoren sind.

3. Schaltungsanordnung nach Anspruch 1 oder 2, **dadurch gekennzeichnet, dass** die spannungsbegrenzenden Elemente (VLE) Z-Dioden sind.

4. Schaltungsanordnung nach einem der Ansprüche 1 bis 3, **dadurch gekennzeichnet, dass** die spannungsbegrenzenden Elemente (VLE) jeweils die Spannung der ihnen parallel geschalteten Speicherelemente (SC) auf eine Spannung begrenzen, die sich aus der Summe der zulässigen Spannungen Uₘₐₓ der einzelnen Speicherelemente (SC) der jeweiligen Kombination oder Unterkombination ergibt.

5. Schaltungsanordnung nach einem der Ansprüche 1 bis 4, **dadurch gekennzeichnet, dass** die spannungsbegrenzenden Elemente (VLE) für die Kombinationen Z-Dioden mit einer Durchbruchspannung von M*Uₘₐₓ sind und die spannungsbegrenzenden Elemente (VLE) für das erste Speicherelement (SC₁) und das n-te Speicherelement (SCₙ) Z-Dioden mit einer Durchbruchspannung von Uₘₐₓ oder integrierte Schaltungen (VLEint) mit Überspannungsschutzfunktion sind und die spannungsbegrenzenden Elemente (VLE) für jede Unterkombination Z-Dioden mit einer Durchbruchspannung von K*Uₘₐₓ oder integrierte Schaltungen (VLEint) mit Überspannungsschutzfunktion sind, wobei K die Anzahl der Speicherelemente (SC) der Unterkombination ist.
